# EUROPEAN PATENT APPLICATION

(11) **EP 4 723 714 A1**
(43) Date of publication of application: **08.04.2026**
(21) Application number: 24814833.0
(22) Date of filing: 11.01.2024
(51) Int. Cl.: H04W 16/28, H04W 72/0457, H04W 84/12, H04W 88/06, H04W 88/10

(54) **ACCESS POINT DEVICE AND STATION DEVICE**

(30) Priority: 01.06.2023 JP 2023091068
(71) Applicant: Sharp Kabushiki Kaisha, Sakai City, Osaka 590-8522 (JP)
(72) Inventor: NAKAMURA Osamu, Sakai City, Osaka 590-8522 (JP); YAMADA Ryota, Sakai City, Osaka 590-8522 (JP); NAMBA Hideo, Sakai City, Osaka 590-8522 (JP)
(74) Representative: Müller Hoffmann & Partner
(86) International application number: PCT/JP2024/000372
(87) International publication number: WO 2024/247345

(57) **Abstract**

According to the present invention, in order to achieve communication in a band in which path loss is large and beamforming is effective, such as a millimeter wave band or a terahertz wave band that is a higher frequency band, a wireless LAN device performs connection of multiple links and a preferred beam direction is searched for between the wireless LAN devices.

## Description

### Technical Field

The present invention relates to an access point apparatus and a station apparatus.

This application claims priority to JP 2023-091068 filed in Japan on June 1, 2023, the contents of which are incorporated herein by reference.

### Background Art

The Institute of Electrical and Electronics Engineers Inc. (IEEE) has been continuously working to update the IEEE 802.11 specification, which is a wireless Local Area Network (LAN) standard, in order to achieve a higher speed and frequency efficiency in wireless LAN communication. In a wireless LAN, radio communication can be performed using unlicensed bands that can be used without approval (license) by nations or regions. For applications for individuals including an application for domestic use, Internet access from residences is wirelessly established by, for example, including wireless LAN access point functions in line termination apparatuses for connection to a wide area network (WAN) line such as the Internet or connecting wireless LAN access point apparatuses to the line termination apparatuses. That is, wireless LAN station apparatuses such as smartphones and personal computers can connect to the wireless LAN access point apparatuses to access the Internet.

IEEE 802.11ax specifications had been standardized in 2021, and wireless LAN devices compliant with the standards and communication apparatuses such as smartphones and personal computers equipped with the wireless LAN devices have appeared on the market as products that are compliant with Wi-Fi 6 (trade name; a name for IEEE 802.11ax compliant products certified by the Wi-Fi alliance). In addition, activities for standardizing IEEE 802.11be as a standard succeeding IEEE 802.11ax have been started. With the rapid spread of wireless LAN devices, further improvement in throughput per user in environments where wireless LAN devices are densely installed has been studied in the standardization of IEEE 802.11be.

Wireless LAN communication apparatuses compliant with the specifications of IEEE 802.11ax and previous versions formulated in the past cannot bundle up and use different frequency bands (2.4 GHz band, 5 GHz band, 6 GHz band, and the like) to be used for communication. In addition, in order to switch frequency bands, the current frequency band needs to be disconnected first and reconnection to another frequency band needs to be made.

Then, in IEEE 802.11be standardization, multi-link operation (MLO) has been discussed in which a wireless LAN communication apparatus uses multiple frequency bands to enable connection of multiple links to be maintained (see NPL 1). In addition, discussion of ultra high reliability (UHR) has been started as a standard succeeding IEEE 802.11be. In the UHR, use of millimeter waves (45 GHz band, 60 GHz band, and the like) as one type of link constituting multi-link has also been discussed (see NPL 2).

### Citation List

### Non Patent Literature

NPL 1: IEEE 802.11-19/0773-08-00be, Nov. 2019
NPL 2: IEEE 802.11-22/1884-00-0uhr, Nov. 2022

### Summary of Invention

### Technical Problem

A human-centered society, which achieves both economic development and solution of social problems, has been advocated, from the Cabinet Office, as a future society to be aimed at by a system called Society 5.0, in which cyber space (virtual space) and physical space (real space) are integrated in a sophisticated manner. In order to realize Society 5.0, a huge amount of information of the physical space needs to be accumulated in the cyber space. For example, videos of surveillance cameras in the physical space need to be uploaded to the cyber space. Since a wide band is required for transmission of high-definition video, use of a high frequency band that can secure a wide band is expected. However, path loss is significantly larger in a millimeter wave band or a terahertz wave band that is a higher frequency band, compared to a microwave band, and beamforming by a transmitter and beamforming by a receiver are desirable to compensate for the path loss. In the existing specifications of IEEE 802.11ax and previous versions formulated, a technique for beamforming has been used that enhances efficiency of beamforming by searching for a beam direction using one frequency band. In a case of using the millimeter wave band or the terahertz wave band that is a higher frequency band, there are problems in that the cost at the time of implementation is higher compared to the microwave band, the size of a terminal increases, and power consumption necessary for a longer communication distance and a higher transmission speed increases.

An aspect of the present invention has been made in view of such circumstances, and an object thereof is to provide a communication apparatus and a communication method for searching for a preferred beam direction between wireless LAN devices at the time of a connection of multiple links including a millimeter wave band or a terahertz wave band.

### Solution to Problem

The communication apparatus and the communication method according to an aspect of the present invention for solving the aforementioned problem are as follows.
(1) Specifically, an access point apparatus according to an aspect of the present invention is an access point apparatus that communicates with a station apparatus, the access point apparatus including a receiver, a transmitter, and a controller, in which the receiver receives a sector sweep request frame using a first frequency band and receives multiple sector sweep signals using a second frequency band, the transmitter transmits a sector sweep response frame and a beam index indicating one of multiple sector sweep signals using the first frequency band, the controller determines, after receiving the multiple sector sweep signals, the beam index to be used by the station apparatus for transmission, and controls the transmitter to transmit the beam index to the station apparatus, the sector sweep request frame includes information indicating the second frequency band, and the sector sweep response frame includes a transmission timing of a sector sweep transmit signal, and the multiple sector sweep signals are received from the transmission timing.
(2) The access point apparatus according to an aspect of the present invention may transmit the information related to the beam index in a transmission opportunity held by the station apparatus.
(3) The access point apparatus according to an aspect of the present invention may acquire a transmission opportunity by carrier sense in the second frequency band, and receive the multiple sector sweep signals during a period of the transmission opportunity.
(4) A station apparatus according to an aspect of the present invention is a station apparatus that communicates with an access point apparatus, the station apparatus including a transmitter, a receiver, and a controller, in which the receiver receives a sector sweep response frame and a beam index indicating one of multiple sector sweep signals using a first frequency band, the sector sweep response frame includes information indicating a second frequency band and a transmission timing of a sector sweep signal, the transmitter transmits the multiple sector sweep signals in the second frequency band and at the transmission timing included in the sector sweep response frame, and the controller controls beamforming in the second frequency band based on information related to the beam index.
(5) The station apparatus according to an aspect of the present invention may acquire a transmission opportunity, and the transmitter may transmit information for requesting reception of the information related to the beam index to the access point apparatus and receive the information related to the beam index from the access point apparatus during a period of the transmission opportunity.

### Advantageous Effect of Invention

According to an aspect of the present invention, it is possible to search for a preferred beam direction between wireless LAN devices at the time of simultaneous connection of multiple links including a millimeter wave band or a terahertz wave band.

### Brief Description of Drawings

FIG. 1 is a diagram illustrating an example of a frame structure according to an aspect of the present invention.
FIG. 2 is a diagram illustrating an example of a frame structure according to an aspect of the present invention.
FIG. 3 is a diagram illustrating an example of communication according to an aspect of the present invention.
FIG. 4 is a schematic diagram illustrating examples of splitting radio resources according to an aspect of the present invention.
FIG. 5 is a diagram illustrating a configuration example of a communication system according to an aspect of the present invention.
FIG. 6 is a block diagram illustrating a configuration example of a radio communication apparatus according to an aspect of the present invention.
FIG. 7 is a block diagram illustrating a configuration example of a radio communication apparatus according to an aspect of the present invention.
FIG. 8 is a block diagram illustrating a configuration example of a radio communication apparatus according to an aspect of the present invention.
FIG. 9 is a diagram illustrating an example of a frame structure according to an aspect of the present invention.
FIG. 10 is a diagram illustrating an example of frame transmission and/or reception according to an aspect of the present invention.
FIG. 11 is a diagram illustrating an example of transmitting a beam search response according to an aspect of the present invention.
FIG. 12 is a diagram illustrating an example of a flow of a beam search response according to an aspect of the present invention.

### Description of Embodiment

A communication system according to the present embodiment includes an access point apparatus (also referred to as a base station apparatus) and multiple station apparatuses (also referred to as terminal apparatuses). The communication system and a network including the access point apparatus and the station apparatus will be referred to as a basic service set (BSS, management range). The station apparatus according to the present embodiment can have functions of the access point apparatus. Similarly, the access point apparatus according to the present embodiment can have functions of the station apparatus. Accordingly, in a case that a communication apparatus or a radio communication apparatus is simply mentioned below, the communication apparatus or the radio communication apparatus can indicate both the station apparatus and the access point apparatus.

The base station apparatus and the terminal apparatuses in the BSS are assumed to perform communication based on carrier sense multiple access with collision avoidance (CSMA/CA). Although the present embodiment is intended for an infrastructure mode in which a base station apparatus performs communication with multiple terminal apparatuses, a method of the present embodiment can also be performed in an ad hoc mode in which terminal apparatuses perform communication directly with each other. In the ad hoc mode, a terminal apparatus substitutes for a base station apparatus to form a BSS. The BSS in the ad hoc mode may also be referred to as an independent basic service set (IBSS). In the following description, a terminal apparatus that forms an IBSS in the ad hoc mode can also be regarded as a base station apparatus. The method of the present embodiment can also be performed in Wi-Fi Direct (trade name) in which terminal apparatuses directly communicate with each other. In Wi-Fi Direct, the terminal apparatuses form a group instead of the base station apparatus. Hereinafter, the terminal apparatus as a group owner forming a group in Wi-Fi Direct can also be regarded as a base station apparatus.

In an IEEE 802.11 system, each apparatus can transmit frames (communication frames) of multiple frame types in a common frame format. A frame is defined in each of the physical (PHY) layer, the medium access control (MAC) layer, and the logical link control (LLC) layer.

The frame of the PHY layer is referred to as a physical protocol data unit (PPDU or physical layer frame). The PPDU includes a physical layer header (PHY header) including header information and the like for performing signal processing in the physical layer, a physical service data unit (PSDU or MAC layer frame) that is a data unit processed in the physical layer, and the like. The PSDU may include an aggregated MAC protocol data unit (MPDU) (A-MPDU) in which multiple MPDUs serving as retransmission units in a radio section are aggregated.

A PHY header includes a reference signal such as a short training field (STF) used for detection, synchronization, and the like of signals, a long training field (LTF) used for obtaining channel information for demodulating data, and a control signal such as a signal (SIG) including control information for demodulating data. STFs are classified into a legacy-STF (L-STF), a high throughput-STF (HT-STF), a very high throughput-STF (VHT-STF), a high efficiency-STF (HE-STF), an extremely high throughput-STF (EHT-STF), and the like in accordance with corresponding standards, and LTFs and SIGs are also similarly classified into an L-LTF, an HT-LTF, a VHT-LTF, an HE-LTF, an L-SIG, an HT-SIG, a VHT-SIG, an HE-SIG, and an EHT-SIG in accordance with corresponding standards. The VHT-SIG is further classified into VHT-SIG-A1, VHT-SIG-A2, and VHT-SIG-B. Similarly, the HE-SIG is classified into HE-SIG-A1 to 4 and HE-SIG-B. On the assumption of technology update in the same standard, a universal signal (U-SIG) field including supplemental control information may be included.

Furthermore, the PHY header can include information for identifying a BSS of a transmission source of the frame (hereinafter also referred to as BSS identification information). The information for identifying a BSS can be, for example, a service set identifier (SSID) of the BSS or a MAC address of a base station apparatus of the BSS. The information for identifying a BSS can be a value unique to the BSS (e.g., a BSS color, and the like) other than an SSID or a MAC address.

The PPDU is modulated in accordance with the corresponding standard. In the IEEE 802.11n standard, for example, a PPDU is modulated into an orthogonal frequency division multiplexing (OFDM) signal.

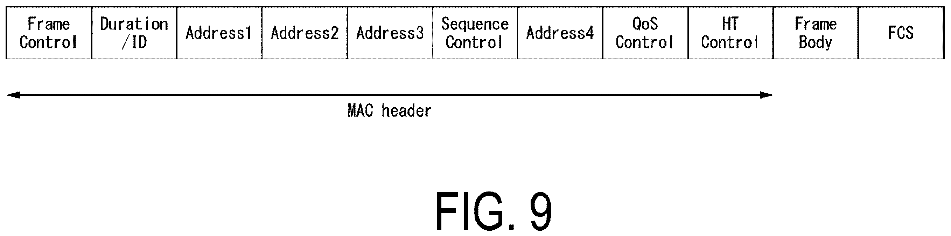

An MPDU includes a MAC header including header information and the like for performing signal processing in the MAC layer, a MAC service data unit (MSDU) or a frame body that is a data unit processed in the MAC layer, and a frame check sequence (FCS) for checking whether there is an error in a frame (FIG. 9). Multiple MSDUs can be aggregated as an aggregated MSDU (A-MSDU).

The frame types of frames of the MAC layer are roughly classified into three frame types, namely a management frame for managing a connection state and the like between apparatuses, a control frame for managing a communication state between apparatuses, and a data frame including actual transmission data. Each frame type is further classified into multiple kinds of subframe types. The control frame includes a reception completion notification (acknowledge (Ack or ACK)) frame, a transmission request (request to send (RTS)) frame, a reception preparation completion (clear to send (CTS)) frame, and the like. The management frame includes a beacon frame, a probe request frame, a probe response frame, an authentication frame, an association request frame, an association response frame, and the like. The data frame includes a data frame, a polling (CF-poll) frame, and the like. Each apparatus can recognize the frame type and the subframe type of a received frame by interpreting contents of the frame control field included in the MAC header.

Note that an Ack may include a block acknowledgement (Block Ack or BA). A Block Ack can give a reception completion notification with respect to multiple MPDUs.

The beacon frame includes a field in which an interval at which a beacon is transmitted (Beacon interval) and an SSID are described. The base station apparatus can periodically broadcast a beacon frame within a BSS, and each terminal apparatus can recognize the base station apparatus in the surroundings of the terminal apparatus by receiving the beacon frame. The action of the terminal apparatus recognizing the base station apparatus based on the beacon frame broadcast from the base station apparatus is referred to as passive scanning. On the other hand, the action of the terminal apparatus searching for the base station apparatus by broadcasting a probe request frame in the BSS is referred to as active scanning. The base station apparatus can transmit a probe response frame in response to the probe request frame, and contents described in the probe response frame are equivalent to those in the beacon frame.

A terminal apparatus recognizes a base station apparatus and then performs association processing with respect to the base station apparatus. The association processing is classified into an authentication procedure and an association procedure. A terminal apparatus transmits an authentication frame (authentication request) to a base station apparatus that the terminal apparatus desires to associate with. Once the base station apparatus receives the authentication frame, then the base station apparatus transmits, to the terminal apparatus, an authentication frame (authentication response) including a status code indicating whether authentication can be made for the terminal apparatus. The terminal apparatus can determine whether the base station apparatus has allowed the authentication request from the terminal apparatus itself by interpreting the status code described in the authentication frame. Note that the base station apparatus and the terminal apparatus can exchange the authentication frame multiple times.

After the authentication procedure, the terminal apparatus transmits an association request frame (or reassociation request frame) to the base station apparatus in order to perform the association procedure. Once the base station apparatus receives the association request frame, the base station apparatus determines whether to allow association of the terminal apparatus and transmits an association response frame for notifying the terminal apparatus thereof. In the association response frame, an association identifier (AID) for identifying the terminal apparatus is described in addition to the status code indicating whether to perform the association processing. The base station apparatus can manage multiple terminal apparatuses by configuring different AIDs for the terminal apparatuses for which the base station apparatus has allowed association.

After the association processing is performed, the base station apparatus and the terminal apparatus perform actual data transmission. In the IEEE 802.11 system, a distributed coordination function (DCF), a point coordination function (PCF), and mechanisms in which the aforementioned mechanisms are enhanced (an enhanced distributed channel access (EDCA) or a hybrid control mechanism (hybrid coordination function (HCF)), and the like) are defined. A case that the base station apparatus transmits signals to the terminal apparatus using the DCF will be described below as an example.

In the DCF, the base station apparatus and the terminal apparatus perform carrier sense (CS) for checking usage of a radio channel in the surroundings of the apparatuses themselves prior to communication. For example, in a case that the base station apparatus serving as a transmitting station receives a signal of a higher level than a predefined clear channel assessment level (CCA level) on the radio channel, transmission of frames on the radio channel is postponed. Hereinafter, a state in which a signal of a level that is equal to or higher than the CCA level is detected on the radio channel will be referred to as a busy state, and a state in which a signal of a level that is equal to or higher than the CCA level is not detected will be referred to as an idle state. In this manner, CS performed based on power of a signal actually received by each apparatus (received power level) is called physical carrier sense (physical CS). Note that the CCA level is also called a carrier sense level (CS level) or a CCA threshold (CCAT). Note that in a case that a signal of a level that is equal to or higher than the CCA level has been detected, the base station apparatus and the terminal apparatus start to perform an operation of demodulating at least a signal of the PHY layer.

The base station apparatus performs carrier sense in the period of an inter frame space (IFS) configured in accordance with the type of a frame to be transmitted and determines whether the radio channel is in a busy state or an idle state. The period in which the base station apparatus performs carrier sense varies depending on the frame type and the subframe type of the frame to be transmitted by the base station apparatus. In the IEEE 802.11 system, multiple IFSs with different periods are defined, and there are a short frame interval (short IFS or SIFS) used for a frame with the highest priority given, a polling frame interval (PCF IFS or PIFS) used for a frame with a relatively high priority, a distribution control frame interval (DCF IFS or DIFS) used for a frame with the lowest priority, and the like. In a case of transmitting a data frame with the DCF, the base station apparatus uses the DIFS.

The base station apparatus waits for the DIFS period and then further waits for a random backoff time to prevent frame collision. In the IEEE 802.11 system, a random backoff time called a contention window (CW) is used. CSMA/CA works with the assumption that a frame transmitted by a certain transmitting station is received by a receiving station in a state in which there is no interference from other transmitting stations. Accordingly, in a case that transmitting stations transmit frames at the same timing, the frames collide against each other, and the receiving station cannot receive them properly. Thus, each transmitting station waits for a randomly configured time before starting transmission, and thus collision of frames can be avoided. In a case that the base station apparatus determines, through carrier sense, that a radio channel is in the idle state, the base station apparatus starts to count down a CW. Only when the CW reaches zero, the base station apparatus acquires a transmission privilege and becomes able to transmit a frame to the terminal apparatus. Note that in a case that the base station apparatus determines through the carrier sense that the radio channel is in the busy state during the countdown of the CW, the base station apparatus stops the countdown of the CW. Then, in a case that the radio channel enters the idle state again, the base station apparatus restarts the rest of the countdown of the CW after the wait for the same period as that of the previous IFS.

Next, details of frame reception will be described. A terminal apparatus that is a receiving station receives a frame, interprets the PHY header of the frame, and demodulates the received frame. Then, the terminal apparatus reads a value of a destination address (DA) field in the MAC header of the demodulated signal and thus can recognize whether the frame is addressed to the terminal apparatus itself. Note that the terminal apparatus can also determine the destination of the frame based on information described in the PHY header (e.g., a group identifier (group ID or GID) described in VHT-SIG-A).

In a case that the terminal apparatus determines that the received frame is addressed to the terminal apparatus itself and successfully demodulates the frame without any error, the terminal apparatus is to transmit an Ack frame indicating the proper reception of the frame to the base station apparatus that is the transmitting station. The Ack frame is one of frames with the highest priority transmitted only after a wait for the SIFS period (with no random backoff time). The base station apparatus ends the series of communications with the reception of the Ack frame transmitted from the terminal apparatus. Note that in a case that the terminal apparatus is not able to receive the frame properly, the terminal apparatus does not transmit an Ack. Thus, in a case that the Ack frame has not been received from the receiving station (terminal apparatus) for a certain period (a length of SIFS + Ack frame) after the transmission of the frame, the base station apparatus considers the communication to be failed and ends the communication. In this manner, an end of a single communication operation (also called a burst) in the IEEE 802.11 system is always to be determined based on whether an Ack frame has been received, except for special cases such as a case of transmission of a broadcast signal such as a beacon frame, a case that fragmentation for splitting transmission data is used, or the like.

In a case that the terminal apparatus determines that the received frame is not addressed to the terminal apparatus itself, the terminal apparatus configures a network allocation vector (NAV) based on the length of the frame described in the PHY header or the like. The terminal apparatus does not attempt communication during the period configured in the NAV. In other words, because the terminal apparatus performs the same operation as in the case that the terminal apparatus determines the radio channel is in the busy state through physical CS for the period configured in the NAV, the communication control based on the NAV is also called virtual carrier sense (virtual CS). The NAV is also configured by a transmission request (Request To Send or RTS) frame or a reception preparation completion (Clear To Send or CTS) frame, which are introduced to solve a hidden terminal problem in addition to the case that the NAV is configured based on the information described in the PHY header.

Unlike the DCF in which each apparatus performs carrier sense and autonomously acquires the transmission privilege, with the PCF, a control station called a point coordinator (PC) controls the transmission privilege of each apparatus within a BSS. In general, a base station apparatus acts as a PC and acquires the transmission privilege of a terminal apparatus within a BSS.

A communication period using the PCF includes a contention free period (CFP) and a contention period (CP). Communication is performed based on the aforementioned DCF during a CP, and a PC controls the transmission privilege during a CFP. The base station apparatus acting as a PC broadcasts a beacon frame with description of a CFP period (CFP max duration) and the like in a BSS prior to communication with the PCF. Note that the PIFS is used for transmission of the beacon frame broadcast at the time of a start of transmission by the PCF, and the beacon frame is transmitted without waiting for the CW. The terminal apparatus that has received the beacon frame configures the CFP period described in the beacon frame in a NAV. Hereinafter, the terminal apparatus can acquire the transmission privilege only in a case of receiving a signal (e.g., a data frame including CF-poll) for signaling the acquisition of the transmission privilege transmitted by the PC, until the NAV elapses or a signal (e.g., a data frame including CF-end) broadcasting the end of the CFP in the BSS is received. Note that because no packet collision occurs in the same BSS during the CFP period, each terminal apparatus does not take a random backoff time used for the DCF.

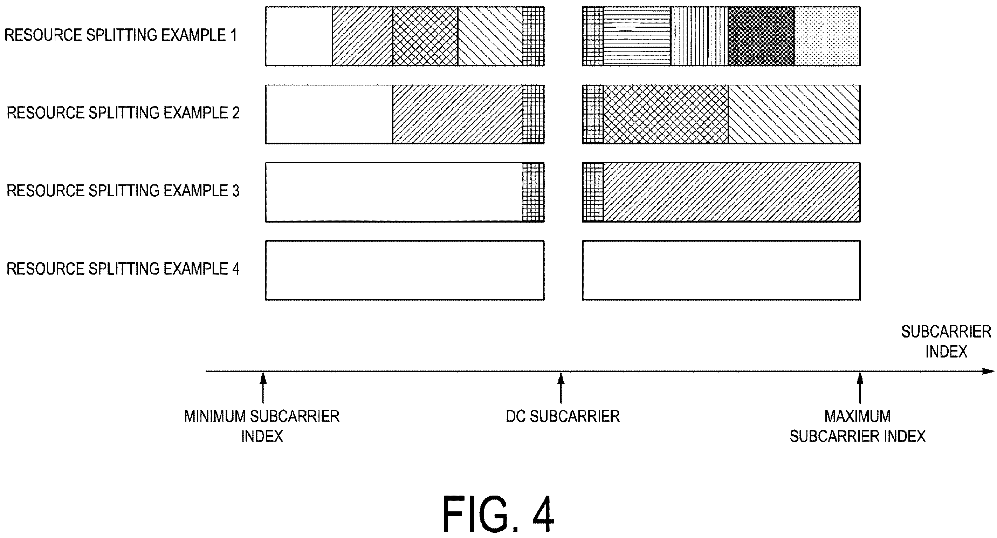

A radio medium can be split into multiple resource units (RUs). FIG. 4 is a schematic diagram illustrating examples of split states of a radio medium. In Resource splitting example 1, for example, a radio communication apparatus can split a frequency resource (subcarrier) that is a radio medium into nine RUs. Similarly, in Resource splitting example 2, the radio communication apparatus can split a subcarrier that is a radio medium into five RUs. It is a matter of course that the resource splitting examples illustrated in FIG. 4 are merely examples, and, for example, the multiple RUs can include a different number of subcarriers. The radio medium that is split into RUs can include not only a frequency resource but also a spatial resource. The radio communication apparatus (e.g., an AP) can transmit frames to multiple terminal apparatuses (e.g., multiple STAs) at the same time by allocating frames addressed to different terminal apparatuses to the RUs. An AP can describe information indicating a split state of the radio medium (resource allocation information) as common control information in the PHY header of the frame transmitted by the AP itself. Moreover, the AP can describe information indicating an RU to which a frame addressed to each STA is allocated (resource unit assignment information) as unique control information in the PHY header of the frame transmitted by the AP itself.

Multiple terminal apparatuses (e.g., multiple STAs) can transmit frames at the same time by allocating and transmitting the frames to and in the RUs allocated to themselves. The multiple STAs can perform frame transmission after waiting for a prescribed period after receiving a frame including trigger information (trigger frame or TF) transmitted from the AP. Each STA can recognize the RU allocated to the STA itself based on the information described in the TF. Each STA can acquire the RU through random access with reference to the TF.

The AP can allocate multiple RUs to one STA at the same time. The multiple RUs can include continuous subcarriers or can include discontinuous subcarriers. The AP can transmit one frame using multiple RUs allocated to one STA. The AP can allocate multiple frames to different RUs respectively and transmit the multiple frames. At least one of the multiple frames can be a frame including common control information for multiple terminal apparatuses that transmit resource allocation information.

One STA can be allocated multiple RUs by the AP. The STA can transmit one frame using the multiple allocated RUs. Also, the STA can allocate multiple frames to different RUs respectively and transmit the multiple frames by using the multiple allocated RUs. The multiple frames each can be a frame of a different frame type.

The AP can allocate multiple AIDs to one STA. The AP can allocate an RU to each of the multiple AIDs allocated to the one STA. The AP can transmit respective different frames using the RUs respectively allocated to the multiple AIDs allocated to the one STA. The different frames each can be a frame of a different frame type.

One STA can be allocated multiple AIDs by the AP. The one STA can be allocated an RU with respect to each of the multiple allocated AIDs. The one STA recognizes all of the RUs allocated to the multiple AIDs allocated to the STA itself as RUs allocated to the STA itself and can transmit one frame using the multiple allocated RUs. In addition, the one STA can transmit multiple frames using the multiple allocated RUs. At this time, the STA can describe and transmit, in the multiple frames, information indicating the AIDs associated with the respective allocated RUs. The AP can transmit respective different frames using the RUs respectively allocated to the multiple AIDs allocated to the one STA. The different frames can be frames of different frame types.

Hereinafter, the base station apparatus and the terminal apparatus may be collectively referred to as a radio communication apparatus or a communication apparatus. Information exchanged in a case that a certain radio communication apparatus performs communication with another radio communication apparatus may also be referred to as data. In other words, radio communication apparatuses include a base station apparatus and a terminal apparatus.

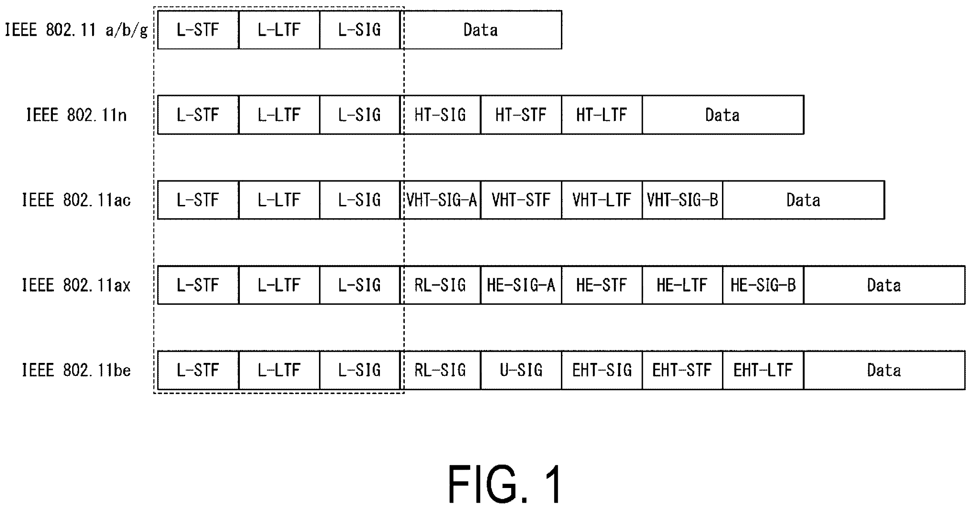

A radio communication apparatus includes any one of or both the function of transmitting a PPDU and a function of receiving a PPDU. FIG. 1 is a diagram illustrating examples of configurations of a PPDU transmitted by a radio communication apparatus. A PPDU that is compliant with the IEEE 802.11a/b/g standard includes L-STF, L-LTF, L-SIG, and a data frame (a MAC Frame, a MAC frame, a payload, a data part, data, information bits, and the like). A PPDU that is compliant with the IEEE 802.11n standard includes L-STF, L-LTF, L-SIG, HT-SIG, HT-STF, HT-LTF, and a data frame. A PPDU that is compliant with the IEEE 802.11ac standard includes some or all of L-STF, L-LTF, L-SIG, VHT-SIG-A, VHT-STF, VHT-LTF, VHT-SIG-B, and a data frame. A PPDU studied in the IEEE 802.11ax standard includes some or all of L-STF, L-LTF, L-SIG, RL-SIG in which L-SIG is temporally repeated, HE-SIG-A, HE-STF, HE-LTF, HE-SIG-B, and a data frame. A PPDU studied in the IEEE 802.11be standard includes some or all of L-STF, L-LTF, L-SIG, RL-SIG, U-SIG, EHT-SIG, EHT-STF, HET-LTF, and a Data frame.

L-STF, L-LTF, and L-SIG surrounded by the dotted line in FIG. 1 are configurations commonly used in the IEEE 802.11 standard (hereinafter, L-STF, L-LTF, and L-SIG may also be collectively referred to as an "L-header"). For example, a radio communication apparatus that is compliant with the IEEE 802.11a/b/g standard can appropriately receive an L-header inside a PPDU that is compliant with the IEEE 802.11n/ac standard. The radio communication apparatus that is compliant with the IEEE 802.11a/b/g standard can receive the PPDU that is compliant with the IEEE 802.11n/ac standard while regarding it as a PPDU that is compliant with the IEEE 802.11a/b/g standard.

However, because the radio communication apparatus that is compliant with the IEEE 802.11a/b/g standard cannot demodulate the PPDU that is compliant with the IEEE 802.11n/ac standard following the L-header, it is not possible to demodulate information about a transmitter address (TA), a receiver address (RA), and a duration/ID field used for configuring a NAV.

As a method for the radio communication apparatus that is compliant with the IEEE 802.11a/b/g standard to appropriately configure the NAV (or perform a receiving operation for a prescribed period), IEEE 802.11 defines a method of inserting duration information to the L-SIG. Information about a transmission speed in the L-SIG (a RATE field, an L-RATE field, an L-RATE, an L_DATARATE, and an L_DATARATE field) and information about a transmission period (a LENGTH field, an L-LENGTH field, and an L_LENGTH) are used by the radio communication apparatus that is compliant with the IEEE 802.11 a/b/g standard to appropriately configure a NAV.

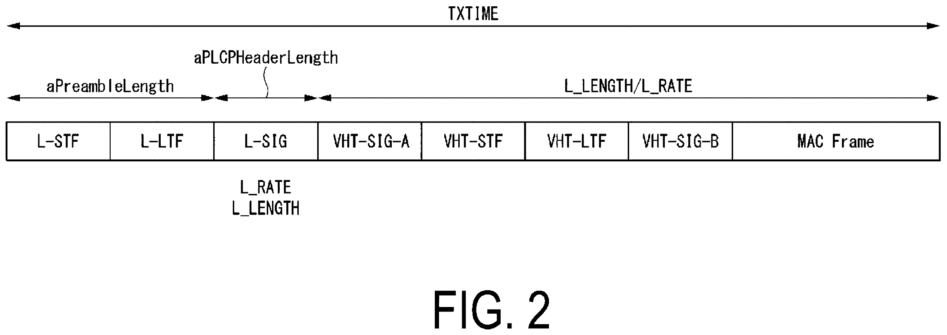

FIG. 2 is a diagram illustrating an example of a method for duration information inserted into an L-SIG. Although a PPDU configuration that is compliant with the IEEE 802.11ac standard is illustrated as an example in FIG. 2, a PPDU configuration is not limited thereto. A PPDU configuration that is compliant with the IEEE 802.11n standard or a PPDU configuration that is compliant with the IEEE 802.11ax standard may be employed. TXTIME includes information about a length of a PPDU, aPreambleLength includes information about a length of a preamble (L-STF + L-LTF), and aPLCPHeaderLength includes information about a length of a PLCP header (L-SIG). L_LENGTH is calculated based on Signal Extension that is a virtual period configured for compatibility with the IEEE 802.11 standard, Nₒₚₛ associated with L_RATE, aSymbolLength that is information about a period of one symbol (a symbol, an OFDM symbol, or the like), aPLCPServiceLength indicating the number of bits included in a PLCP Service field, and aPLCPConvolutionalTailLength indicating the number of tail bits of a convolutional code. The radio communication apparatus can calculate L_LENGTH and insert L_LENGTH into L-SIG. The radio communication apparatus can calculate L-SIG Duration. L-SIG Duration indicates information about a PPDU including L_LENGTH and information about a period that is the sum of periods of Ack and SIFS expected to be transmitted by the destination radio communication apparatus in response to the PPDU.

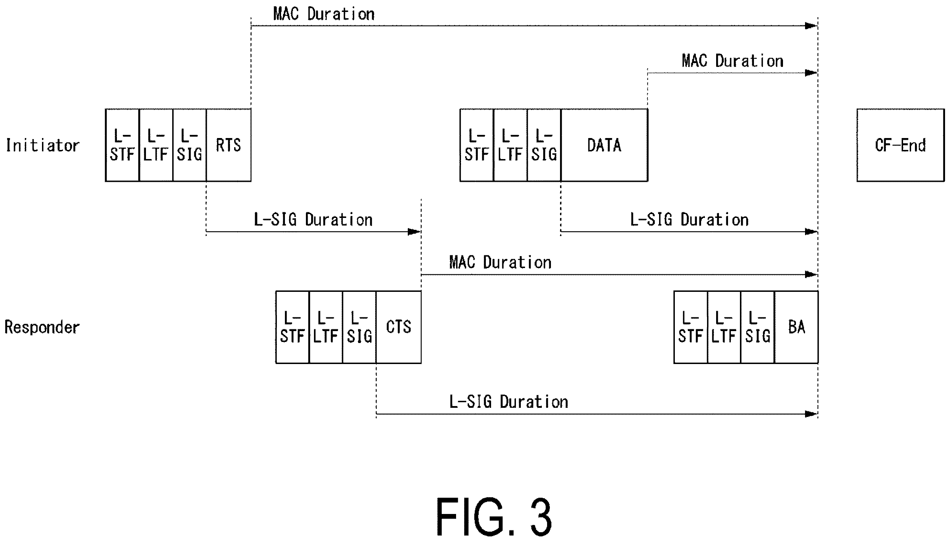

FIG. 3 is a diagram illustrating an example of L-SIG Duration in L-SIG TXOP Protection. DATA (a frame, a payload, data, and the like) includes some of or both the MAC frame and the PHY header. BA includes Block Ack or Ack. A PPDU includes L-STF, L-LTF, and L-SIG and can further include any one or more of DATA, BA, RTS, or CTS. Although L-SIG TXOP Protection using RTS/CTS is illustrated in the example illustrated in FIG. 3, CTS-to-Self may be used. Here, MAC Duration is a period indicated by a value of Duration/ID field. Initiator can transmit a CF-End frame for providing a notification regarding an end of the L-SIG TXOP Protection period.

Next, a method of identifying a BSS from a frame received by a radio communication apparatus will be described. In order for a radio communication apparatus to identify a BSS from a received frame, the radio communication apparatus that transmits a PPDU preferably inserts information for identifying the BSS (BSS color, BSS identification information, or a value unique to the BSS) into the PPDU. The information indicating the BSS color can be described in HE-SIG-A.

The radio communication apparatus can transmit L-SIG multiple times (L-SIG Repetition). For example, demodulation accuracy of L-SIG is improved by the radio communication apparatus on the reception side receiving L-SIG transmitted multiple times by using maximum ratio combining (MRC). Moreover, in a case that reception of L-SIG is properly completed by using MRC, the radio communication apparatus can interpret the PPDU including the L-SIG as a PPDU that is compliant with the IEEE 802.11ax standard.

Even during the operation of receiving the PPDU, the radio communication apparatus can perform a reception operation of a part of a PPDU other than the corresponding PPDU (e.g., the preamble, L-STF, L-LTF, and the PHY header prescribed by IEEE 802.11) (also referred to as a double-reception operation). In a case that a part of a PPDU other than the corresponding PPDU is detected during the operation of receiving the PPDU, the radio communication apparatus can update some or all of information about a destination address, a transmission source address, a PPDU, or a DATA period.

An Ack and a BA can also be referred to as a response (response frame). A probe response, an authentication response, and an association response can also be referred to as a response.

### Embodiment

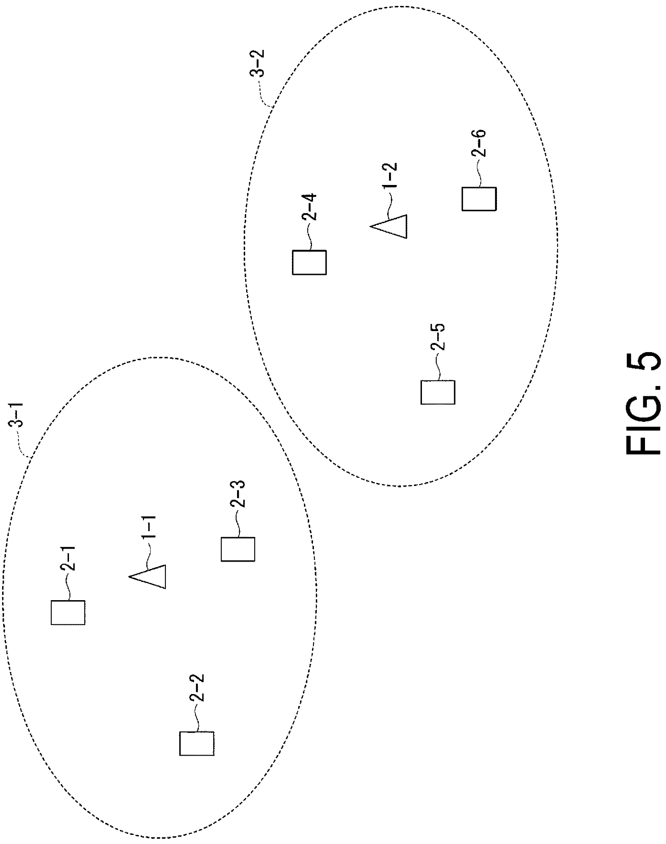

FIG. 5 is a diagram illustrating an example of a radio communication system according to the present embodiment. A radio communication system 3-1 includes a radio communication apparatus 1-1 and radio communication apparatuses 2-1 to 2-3. Note that the radio communication apparatus 1-1 may also be referred to as a base station apparatus 1-1, and the radio communication apparatuses 2-1 to 2-3 may also be referred to as terminal apparatuses 2-1 to 2-3. Each of the radio communication apparatuses 2-1 to 2-3 (terminal apparatuses 2-1 to 2-3) will also be referred to as a radio communication apparatus 2A (terminal apparatus 2A) as an apparatus associated with the radio communication apparatus 1-1. The radio communication apparatus 1-1 and the radio communication apparatus 2A are wirelessly associated with each other and are in a state in which they can transmit and/or receive PPDUs to and from each other. The radio communication system according to the present embodiment may include a radio communication system 3-2 in addition to the radio communication system 3-1. The radio communication system 3-2 includes a radio communication apparatus 1-2 and radio communication apparatuses 2-4 to 2-6. Note that the radio communication apparatus 1-2 may also be referred to as a base station apparatus 1-2 and the radio communication apparatuses 2-4 to 2-6 may also be referred to as terminal apparatuses 2-4 to 2-6. Each of the radio communication apparatuses 2-4 to 2-6 (terminal apparatuses 2-4 to 2-6) will also be referred to as a radio communication apparatus 2B (terminal apparatus 2B) as an apparatus associated with the radio communication apparatus 1-2. Although the radio communication system 3-1 and the radio communication system 3-2 form different BSSs, this does not necessarily mean that extended service sets (ESSs) are different. An ESS indicates a service set forming a local area network (LAN). In other words, radio communication apparatuses belonging to the same ESS can be regarded as belonging to the same network from a higher layer. The BSSs are connected via a distribution system (DS) and form an ESS. Note that each of the radio communication systems 3-1 and 3-2 can further include multiple radio communication apparatuses.

A multi-link device (MLD) is a device capable of multi-link communication, and an access point apparatus corresponding to the MLD is referred to as an MLD access point apparatus, and a station apparatus corresponding to the MLD is referred to as an MLD station apparatus. The MLD access point apparatus and the MLD station apparatus are also collectively referred to as an MLD radio communication apparatus. In the present embodiment, the above-described radio communication apparatuses 1-1, 1-2, and the like are described as MLD radio communication apparatuses. However, in actual operation, not all radio communication apparatuses in the radio communication system need to support MLD.

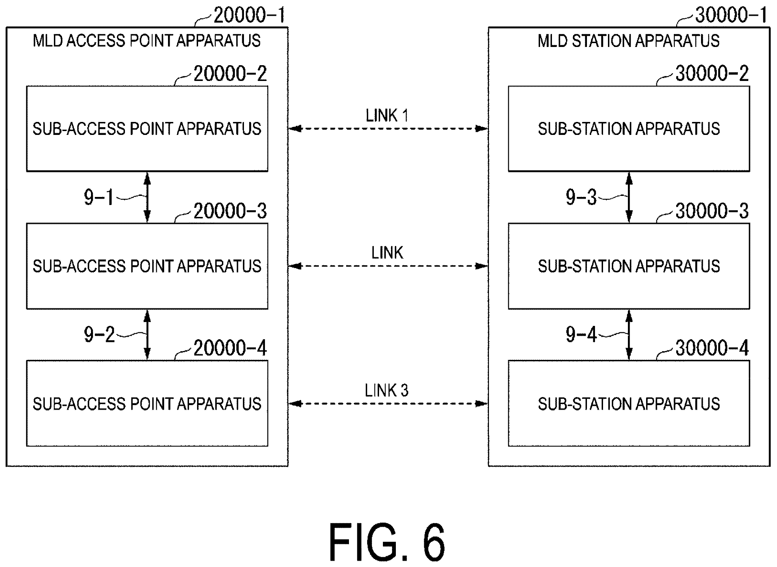

An MLD access point apparatus 20000-1 and an MLD station apparatus 30000-1 will be described with reference to FIG. 6. The MLD radio communication apparatus includes multiple sub-radio communication apparatuses corresponding to frequency bands (or channels or subchannels) of links constituting a multi-link (also referred to as a physical layer link). FIG. 6 illustrates an example in which the MLD access point apparatus 20000-1 includes three sub-radio communication apparatuses, in this case, three sub-access point apparatuses (20000-2, 200000-3, and 20000-4), but the number of sub-access point apparatuses is an arbitrary number of two or more. Similarly, although FIG. 6 illustrates an example in which the MLD station apparatus 30000-1 includes three sub-radio communication apparatuses, in this case, three sub-station apparatuses (30000-2, 300000-3, and 30000-4), the number of sub-station apparatuses is an arbitrary number of two or more. Note that the sub-radio communication apparatus (sub-access point apparatus, sub-station apparatus, or the like) may include a part of a circuit in the radio communication apparatus, and may be referred to as a sub-radio communication unit (sub-access point unit, sub-station unit).

Although FIG. 6 illustrates an example in which multiple sub-radio communication apparatuses are configured as logically separate blocks, the multiple sub-radio communication apparatuses may be physically configured with one radio communication apparatus. Alternatively, the multiple sub-radio communication apparatuses may be configured as physically separate sub-radio communication apparatuses, and in this case, each sub-access point apparatus transmits and/or receives necessary information through connection lines 9-1 and 9-2, and each sub-station apparatus transmits and/or receives necessary information through connection lines 9-3 and 9-4. The present embodiment mainly relates to the former case, in other words, physically a single radio communication apparatus (10000-1) is assumed to be provided, and the configuration will be described below.

Note that the number of sub-access point apparatuses included in one MLD access point apparatus and the number of sub-station apparatuses included in one MLD station apparatus may vary depending on the grade, class, capability, and the like of each MLD radio communication apparatus. An MLD radio communication apparatus of a higher grade, a higher class, or higher capability may include more sub-radio communication apparatuses (sub-access point apparatuses and sub-station apparatuses) that are mounted. In other words, the sub-radio communication apparatuses (sub-access point apparatuses and sub-station apparatuses) constituting each MLD radio communication apparatus located in one radio communication system vary depending on the grade, class, and capability, and the numbers of the apparatuses need not be the same.

The sub-station apparatus 30000-2 is associated with the sub-access point apparatus 20000-2 and establishes a link 1. The sub-station apparatus 30000-3 is associated with the sub-access point apparatus 20000-3 and establishes a link 2. The sub-station apparatus 30000-4 is associated with the sub-access point apparatus 20000-4 and establishes a link 3. In the description of the present embodiment, the number of links constituting the multi-link is three, but is not limited to this and may be any number. The frequency band used in each link can be arbitrarily configured from among the 2.4 GHz band, 5 GHz band, 6 GHz band, 60 GHz band, 140 GHz band, 300 GHz band, and other frequency bands, channels, and subchannels supported by the radio communication system, and may be changed according to the legal regulations of each country.

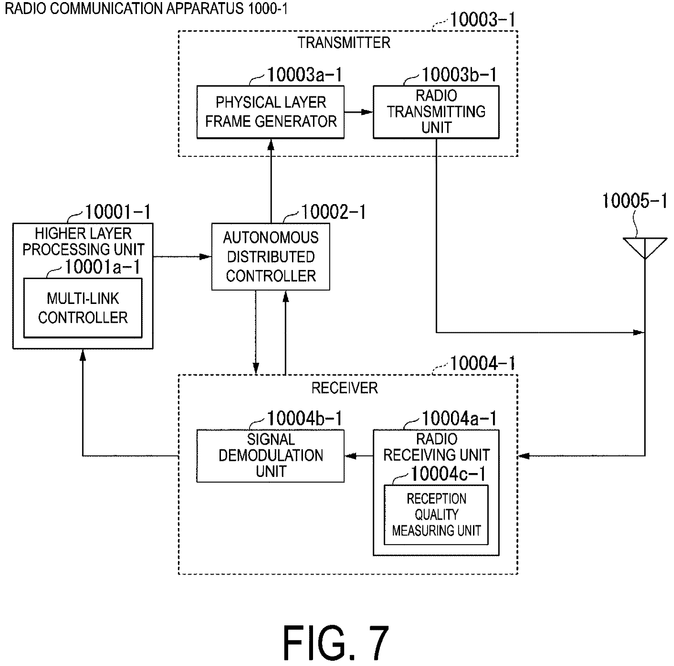

FIG. 7 is a diagram illustrating an example of an apparatus configuration of the radio communication apparatus 10000-1. The radio communication apparatus 10000-1 includes a higher layer processing unit (higher layer processing step) 10001-1, an autonomous distributed controller (autonomous distributed control step) 10002-1, a transmitter (transmission step) 10003-1, a receiver (reception step) 10004-1, and an antenna unit 10005-1.

The higher layer processing unit 10001-1 performs information processing for layers higher than the physical layer, for example, the MAC layer and the LLC layer in regard to information (information related to a transmitted frame, a management information base (MIB), and the like) handled in the radio communication apparatus itself and a frame received from another radio communication apparatus. A multi-link controller 10001a-1 may be included in the higher layer processing unit 10001-1, but may be independent of the higher layer processing unit 10001-1.

The higher layer processing unit 10001-1 can notify the autonomous distributed controller 10002-1 of information related to a frame transmitted to a radio medium and traffic. For example, the information may be control information included in a management frame such as a beacon, or may be measurement information reported by another radio communication apparatus to the radio communication apparatus itself. Moreover, the information may be control information included in a management frame or a control frame with the destination not limited (the information may be directed to the apparatus itself, may be directed to another apparatus, may be broadcast, or may be multicast).

The transmitter 10003-1 includes a physical layer frame generator (physical layer frame generating step) 10003a-1 and a radio transmitting unit (radio transmitting step) 10003b-1. Although the physical layer frame generator 10003a-1 performs error correction encoding on the information bits transferred from the MAC layer, the unit for performing the error correction encoding (encoding block length) is not limited to any particular unit. For example, the physical layer frame generator 10003a-1 can divide the information bit sequence transferred from the MAC layer into information bit sequences having a prescribed length, perform error correction encoding on each of the divided information bit sequences, and configure multiple encoding blocks. Note that dummy bits can be inserted into the information bit sequence transferred from the MAC layer in a case that encoding blocks are configured.

The frame generated by the physical layer frame generator 10003a-1 includes control information. The control information includes information indicating to which RU the data addressed to each radio communication apparatus is mapped (here, the RU includes both frequency resources and spatial resources). The frame generated by the physical layer frame generator 10003a-1 includes a trigger frame for indicating, to the radio communication apparatus that is a destination terminal, frame transmission. The trigger frame includes information indicating the RU to be used by the radio communication apparatus that has received the indication for the frame transmission to transmit the frame.

The radio transmitting unit 10003b-1 converts the physical layer frame generated by the physical layer frame generator 10003a-1 to a signal in a radio frequency (RF) band to generate a radio frequency signal. Processing performed by the radio transmitting unit 10003b-1 includes digital-to-analog conversion, filtering, frequency conversion from a baseband to an RF band, and the like.

The receiver 10004-1 includes a radio receiving unit (radio receiving step) 10004a-1, a signal demodulation unit (signal demodulating step) 10004b-1, and a reception quality measuring unit (reception quality measuring step) 10004c-1.

The reception quality measuring unit 10004c-1 generates information related to reception quality from a signal in the RF band received by the antenna unit 10005-1. The information related to signal quality includes a received power level, a signal to noise ratio (SNR), and the like. The radio receiving unit 10004-1 may notify the autonomous distributed controller 10002-1 (in particular, a CCA unit 10002a-1) and the higher layer processing unit 10001-1 (in particular, the multi-link controller 10001a-1) of information related to reception quality and information related to a received signal. The receiver 10004-1 may also notify the autonomous distributed controller 10002-1 and the higher layer processing unit 10001-1 of other information.

The radio receiving unit 10004a-1 has a function of converting a signal in the RF band received by the antenna unit 10005-1 into a baseband signal and generating a physical layer signal (e.g., a physical layer frame). Processing performed by the radio receiving unit 10004a-1 includes frequency conversion processing from the RF band to the baseband, filtering, and analog-to-digital conversion.

The signal demodulation unit 10004b-1 has a function of demodulating a physical layer signal generated by the radio receiving unit 10004a-1. Processing performed by the signal demodulation unit 10004b-1 includes channel equalization, demapping, error correction decoding, and the like. The signal demodulation unit 10004b-1 can extract, from a physical layer signal, information included in the PHY header, information included in the MAC header, and information included in a received frame, for example. The signal demodulation unit 10004b-1 can notify the higher layer processing unit 10001-1 of the extracted information. Note that the signal demodulation unit 10004b-1 can extract any one or all of the information included in the PHY header, the information included in the MAC header, and the information included in a received frame.

The antenna unit 10005-1 has a function of transmitting the radio frequency signal generated by the radio transmitting unit 10003b-1 to a radio space. Also, the antenna unit 10005-1 has a function of receiving the radio frequency signal and delivering the radio frequency signal to the radio receiving unit 10004a-1.

The multi-link controller 10001a-1 receives the information related to the reception quality of the links (the frequency bands, the channels, and the subchannels) from the reception quality measuring unit 10004c-1, determines whether the links are good or bad, and determines which links are selected and used to form the multi-link. The information related to the reception quality includes a received power level, a signal to noise ratio (SNR), and the like, while not limited thereto.

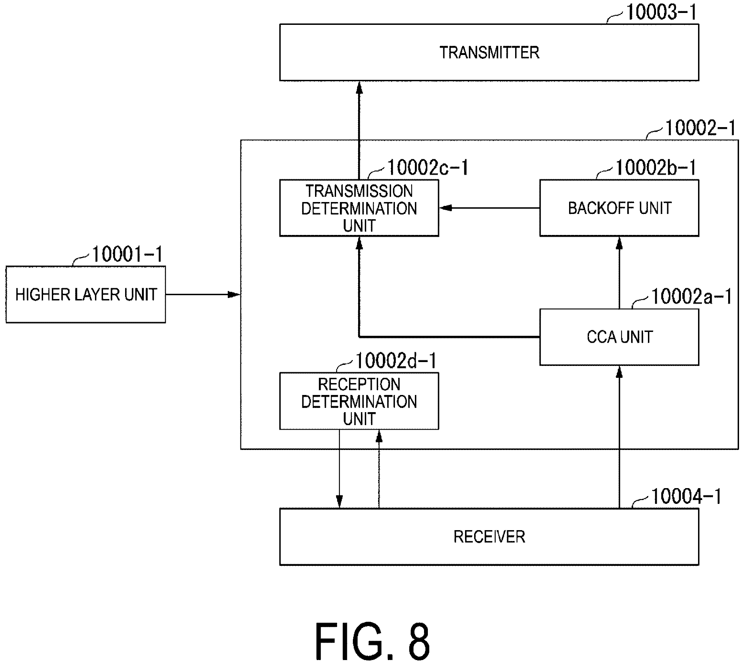

FIG. 8 is a diagram illustrating an example of a configuration of the autonomous distributed controller 10002-1. The autonomous distributed controller 10002-1 includes the CCA unit (CCA step) 10002a-1, a backoff unit (backoff step) 10002b-1, a transmission determination unit (transmission determining step) 10002c-1, and a reception determination unit (reception determining step) 10002d-1.

The CCA unit 10002a-1 can perform determination of a state of a radio resource (including determination between a busy state and an idle state) using any one of or both the information related to received power received via the radio resource and information related to the received signal (including information after decoding) notified from the receiver 10004-1. The CCA unit 10002a-1 can notify the backoff unit 10002b-1 and the transmission determination unit 10002c-1 of the state determination information of the radio resources.

The backoff unit 10002b-1 can perform backoff using the state determination information of the radio resources. The backoff unit 10002b-1 has a function of generating a CW and counting down the CW. For example, the countdown of the CW is performed in a case that the state determination information of the radio resources indicates idle, and the countdown of the CW can be stopped in a case that the state determination information of the radio resources indicates busy. The backoff unit 10002b-1 can notify the transmission determination unit 10002c-1 of the value of the CW.

The transmission determination unit 10002c-1 performs transmission determination using any one of or both the state determination information of the radio resources and the value of the CW. For example, the transmitter 10003-1 can be notified of transmission determination information in a case that the state determination information of the radio resources indicates idle and the value of the CW is zero. The transmitter 10003-1 can be notified of the transmission determination information in a case that the state determination information of the radio resources indicates idle.

The physical layer frame generator 10003a-1 has a function of generating a physical layer frame (PPDU) based on the transmission determination information notified from the transmission determination unit 10002c-1. The physical layer frame generator 10003a-1 performs error correction encoding, modulation, precoding filter multiplication, and the like on frames transmitted from the higher layer. The physical layer frame generator 10003a-1 notifies the radio transmitting unit 10003b-1 of the generated physical layer frame.

The reception determination unit 10002d-1 can indicate reception to the receiver 10004-1. A station apparatus in a power management mode (a sleep mode or a power save mode) normally performs intermittent reception management frames such as beacons. Whether the access point apparatus buffers a frame addressed to the station apparatus itself can be determined from information included in the beacon of which the autonomous distributed controller 10002-1 is notified by the receiver 10004-1. In a case that the access point apparatus buffers the frame addressed to the station apparatus itself, the reception determination unit 10002d-1 indicates reception of the frame to the receiver 10004-1.

By describing, in the PHY header or the MAC header of the frame to be transmitted, information indicating a period during which the radio communication apparatus itself uses a radio medium, the radio communication apparatus 10000-1 can cause radio communication apparatuses in the surroundings of the radio communication apparatus itself to configure NAV only during the period indicated. For example, the radio communication apparatus 10000-1 can describe the information indicating the period in the Duration/ID field or a LENGTH field of the frame to be transmitted. The NAV period with which radio communication apparatuses in the surroundings of the radio communication apparatus itself are configured will be referred to as a TXOP duration (or simply TXOP) acquired by the radio communication apparatus 10000-1. The radio communication apparatus 10000-1 that has acquired the TXOP is referred to as a TXOP holder. The type of frame to be transmitted by the radio communication apparatus 10000-1 to acquire TXOP is not limited to any frame type, and the frame may be a control frame (e.g., an RTS frame or a CTS-to-self frame) or may be a data frame.

The radio communication apparatus 10000-1 that is a TXOP holder can transmit the frame to radio communication apparatuses other than the radio communication apparatus itself during the TXOP. In a case that the radio communication apparatus 1-1 is a TXOP holder, the radio communication apparatus 1-1 can transmit a frame to the radio communication apparatus 2A during the TXOP duration. The radio communication apparatus 1-1 can indicate, to the radio communication apparatus 2A, frame transmission addressed to the radio communication apparatus 1-1 during the TXOP duration. The radio communication apparatus 1-1 can transmit, to the radio communication apparatus 2A, a trigger frame including information for indicating frame transmission addressed to the radio communication apparatus 1-1 during the TXOP duration.

The radio communication apparatus 1-1 may acquire a TXOP for the entire communication band (e.g., operation bandwidth) in which frame transmission is likely to be performed, or may acquire a TXOP for a specific communication band (band) such as a communication band in which frames are actually transmitted (e.g., transmission bandwidth).

The radio communication apparatus that indicates frame transmission in the TXOP duration acquired by the radio communication apparatus 1-1 is not necessarily limited to radio communication apparatuses associated with the radio communication apparatus itself. For example, the radio communication apparatus 1-1 can indicate, to radio communication apparatuses that are not associated with the radio communication apparatus itself, frame transmission in order to cause the radio communication apparatuses in the surroundings of the radio communication apparatus itself to transmit management frames such as a reassociation frame or control frames such as an RTS/CTS frame.

Furthermore, the TXOP in the EDCA that is a data transmission method for which the DCF is enhanced will also be described. The IEEE 802.11e standard relates to the EDCA, and defines the TXOP from the perspective of quality of service (QoS) assurance for various services such as video transmission or the voice over Internet protocol (VoIP). The services are roughly classified into four access categories, namely VOice (VO), VIdeo (VI), Best Effort (BE), and BacK ground (BK). In general, the services include VO, VI, BE, and BK, starting with the highest priority in this order. Each of the access categories has parameters including CWmin as a minimum value of CW, CWmax as a maximum value, Arbitration IFS (AIFS) as a type of IFS, and TXOP limit as an upper limit value of the transmission opportunity, which are configured to give a difference in the priority. For example, it is possible to perform data transmission prioritized over the other access categories by setting CWmin, CWmax, and AIFS of VO with the highest priority for the purpose of voice transmission equal to a relatively small value as compared with the other access categories. For example, for VI, where the amount of transmission data is relatively large due to video transmission, the TXOP limit can be configured to be larger, so that the transmission opportunity can be longer than the other access categories. In this manner, four parameter values of each of the access categories are adjusted for the purpose of QoS assurance in accordance with various services.

In the present embodiment, the signal demodulation unit 10004b-1 of the radio communication apparatus 10000-1 can perform decoding processing for the received signal in the physical layer, and perform error detection. Here, the decoding processing includes decoding processing for error correction codes applied to the received signal. Here, the error detection includes error detection using an error detection code (e.g., a cyclic redundancy check (CRC) code) that has been added to the received signal in advance, and error detection using an error correction code (e.g., low-density parity-check code (LDPC)) having an error detection function from the first. The decoding processing in the physical layer can be applied for each encoding block.

The higher layer processing unit 10001-1 transfers the result of decoding of the physical layer by the signal demodulation unit 10004b-1 to the MAC layer. In the MAC layer, the signal of the MAC layer is restored from the transferred decoding result of the physical layer. Then, the MAC layer performs error detection, and determines whether the signal of the MAC layer transmitted by the radio communication apparatus as a transmission source of the received frame has been properly restored.

A basic multi-link element (BMLE) conveys information related to the MLD or information related to the station apparatus (sub-access point apparatus or sub-station apparatus) included in the MLD. A beacon frame, a probe response frame, a (re)association request frame, or a (re)association response frame is used to transmit the BMLE. Note that the (re)association request frame indicates an association request frame or a reassociation request frame. The (re)association response frame indicates an association response frame or a reassociation response frame. That is, the BMLE is transmitted by the access point apparatus or the station apparatus. The BMLE includes some or all of an MLD MAC address, a link ID, information indicating MLD capability, and information indicating whether a sector sweep (SSW) field is present. The MLD MAC address is information for identifying the MAC address of the MLD to which the station apparatus or the access point apparatus that transmits the BMLE belongs. The link ID is an identifier for identifying a link in the multi-link. The information indicating whether the SSW field is present indicates whether the SSW field is present in a frequency band that requires a sector level sweep (SLS), such as the millimeter wave band or the terahertz wave band including the 60 GHz band a frequency of which is higher than that of the microwave wave band. The microwave band may be defined as ranging from 3 GHz to 30 GHz, the millimeter wave band may be defined as ranging from 30 GHz to 300 GHz, and the terahertz wave band may be defined as ranging from 300 GHz to 3 THz, but in the present embodiment, the terahertz wave band may also include a sub-terahertz wave band ranging from 100 GHz to 300 GHz. Therefore, in a case that communication is performed in a frequency band in which the SLS is not required, information indicating whether the SSW field is present is not included in the BLME. The SSW field includes some or all of Direction, CDOWN (countdown), sector ID, and beam antenna ID. Note that the SSW field is also referred to as a sector sweep signal. Direction indicates whether the SSW field is transmitted by an initiator or a responder. Here, the initiator is an apparatus that initiates the SLS, and the responder is an apparatus with which the SLS initiated by the initiator communicates. The SLS is a process of searching for a preferred sector in the initiator and/or the responder. The preferred sector does not need to be the optimal sector, and any of the sectors that satisfy a quality equal to or higher than a certain threshold may be selected, for example. Furthermore, the number of sectors is not limited to one, and multiple sectors may be selected. The sector ID is used to identify a sector (e.g., an index of a beam direction). The sector ID is configured for each beam antenna that performs beamforming, and the beam antenna ID is used to identify the beam antenna. Note that the beam antenna is also referred to as an antenna panel, an antenna array, or a subarray. The information indicating the MLD capability includes some or all of the maximum number of simultaneous links, and/or the maximum number of sectors, and the maximum number of sectors (beams) that can be simultaneously connected. The maximum number of simultaneous links is the maximum number of access point apparatuses or station apparatuses to and/or from which the MLD can simultaneously transmit and/or receive frames, and the upper limit value thereof is the number of access point apparatuses or station apparatuses belonging to the MLD. The maximum number of sectors that can be simultaneously connected is the number of sectors in which the MLD can simultaneously transmit and/or receive frames, and the upper limit value thereof is the product of the number of sectors and the number of beam antennas.

In data transmission in the 60 GHz band or a higher frequency band, beamforming is effective in compensating for the high path loss. However, at the time of initial setup, the access point apparatus and the station apparatus do not know a preferred transmission/reception sector. Therefore, SLS is performed to check the preferred sector. The SLS is performed in an initiator sector sweep (ISS) period and a responder sector sweep (RSS) period. In order to improve the accuracy of SLS, it is also possible to perform a beam refinement protocol (BRP) after the SLS.

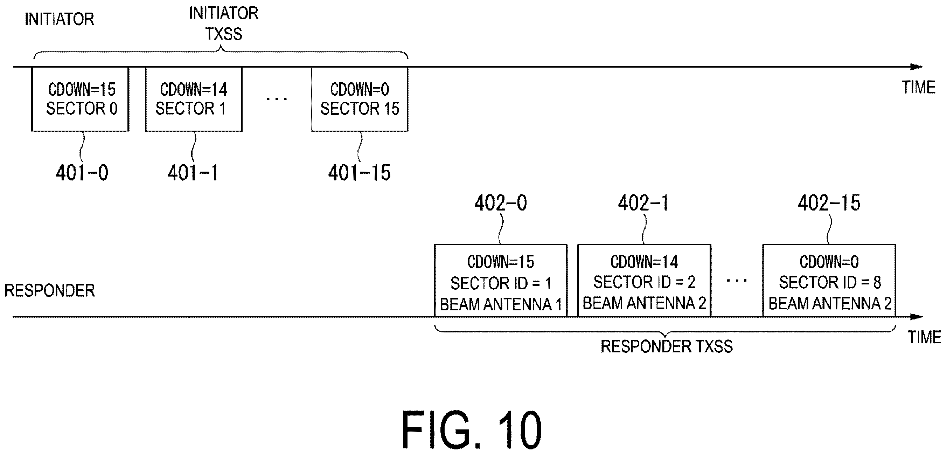

FIG. 10 illustrates an example of the SLS. In the example of FIG. 10, after the initiator performs a transmission sector sweep (TXSS), the responder performs a TXSS. In the TXSS, a preferred transmission sector is searched for. In FIG. 10, reference numerals 401-0 to 401-15 denote ISSW fields (also referred to as first SSW fields) transmitted by the initiator. The ISSW field is transmitted in, for example, a beacon frame. One or more ISSW frames are transmitted by different sectors, and the responder obtains a sector suitable for the responder among these ISSW frames transmitted by the different sectors. Note that the sector suitable for the responder may be selected from a sector with the highest received power of the ISSW frame, a sector with the highest SNR, or the like, while not limited thereto. Although FIG. 10 illustrates the example in which the number of transmission sectors is 16, the number of transmission sectors may be any integer equal to or greater than 1. The ISSW frame includes CDOWN and a sector ID, and CDOWN indicates the number of remaining transmission SSW fields (the number of sectors). Note that an initial value of CDOWN is the number of transmission sectors - 1, and CDOWN = 0 indicates that there is no remaining ISSW field. The sector ID indicates a sector used to transmit the SSW field.

After the TXSS by the initiator (also referred to as ITXSS), the TXSS by the responder (also referred to as RTXSS) is performed. In FIG. 10, reference numerals 402-0 to 402-15 denote RSSW fields (also referred to as second SSW fields) transmitted by the responder. The number of RSSW fields transmitted by the responder is the product of the number of sectors and the number of beam antennas. The RSSW field includes CDOWN, a sector ID, and a beam antenna ID. The responder transmits an RSSW feedback field to the initiator after the RTXSS by the responder. The RSSW feedback field includes information related to the transmission sectors of the initiator selected by the responder. The initiator also transmits an ISSW feedback field to the responder. The ISSW feedback field of the initiator includes information related to the transmission sector of the responder selected by the initiator.

In the high frequency band such as the terahertz wave band or the millimeter wave band, for cost reduction or weight reduction of hardware, it is conceivable that only uplink (uplink, reverse link, UL) transmission is supported and downlink (downlink, forward link, DL) transmission is not supported, or uplink transmission cannot be used temporarily, semi-persistently, or persistently due to limitation of power consumption, transition to a low power consumption mode, deactivation of the uplink, TID-to-Link mapping, or the like. In the example of FIG. 6, assume that transmission or reception is performed using the 2.4 GHz band in the link 1 and the 60 GHz band in the link 2. At this time, assume that the sub-station apparatus 30000-3 supports only transmission. In this case, even in a case that the sub-access point apparatus 20000-3 serves as an initiator to perform the TXSS, the sub-station apparatus 30000-3 cannot receive the ISSW field signal transmitted by the sub-access point apparatus 20000-3. As an alternative, using the link 1, the sub-access point apparatus 20000-2 can notify the sub-station apparatus 30000-2 to transmit the ISSW field signal from the sub-station apparatus 30000-3, and can transmit information indicating the transmission sector suitable for reception by the sub-station apparatus 30000-2. Note that unless otherwise specified, in the following description, the sub-access point apparatus and the sub-station apparatus that perform transmission or reception through the link 1 are also referred to as a first sub-access point apparatus and a first sub-station apparatus, respectively. The sub-access point apparatus and the sub-station apparatus that perform transmission or reception through the link 2 are also referred to as a second sub-access point apparatus and a second sub-station apparatus, respectively.

In a case that the sub-access point apparatus and the sub-station apparatus set up a link, the sub-station apparatus transmits an association request frame to the sub-access point apparatus. The association request frame includes some or all of the BMLE, the capability information, and the TID-to-Link Mapping information. The capability information is information indicating a function supported or implemented by the sub-station apparatus. The TID-to-Link Mapping information indicates a traffic identifier (TID) mapped to each link. The TID is used to distinguish packets (e.g., MSDUs) with supported QoS. In a case that the TID is not mapped to the UL of a certain link in the TID-to-Link Mapping, the UL of the link is disabled. Note that in a case of requesting a re-setup, the sub-station apparatus transmits a reassociation request frame to the sub-access point apparatus. The reassociation request frame includes some or all of the BMLE, the capability information, and the TID-to-Link Mapping information. Control information other than the association request frame and the reassociation request frame, such as control information for power control or control information for controlling a frequency used for communication may include some or all of the BMLE, the capability information, and the TID-to-Link Mapping information.

In a case that the second sub-station apparatus cannot receive downlink transmission, the second sub-station apparatus cannot use the second link to transmit link control information for controlling a link, such as the association request frame, the reassociation request frame, a frame including control information for recovering a dormant link such as the TID-to-Link Mapping information, and a control information frame for limiting a link to be used due to power control. Hence, the first sub-station apparatus transmits the link control information such as the association request frame or the reassociation request frame of the second sub-station apparatus by using the first link. Note that information for controlling a link, such as an association request frame and a reassociation request frame, which is transmitted by using the controlled link, is also referred to as first link control information. Meanwhile, information for controlling a link, such as an association request frame and a reassociation request frame, which is transmitted by using a link different from the controlled link, is also referred to as second link control information. In a case that the first sub-station apparatus transmits the second link control information related to the second sub-station apparatus, the capability information includes capability information of the second sub-station apparatus. The capability information of the second sub-station apparatus includes information indicating whether the second sub-station apparatus is capable of downlink transmission. In a case that the information indicating whether the second sub-station apparatus is capable of downlink transmission indicates capability, it may indicate that the second sub-station apparatus supports or implements both downlink transmission and uplink transmission in the link 2. In a case that the information indicating whether the second sub-station apparatus is capable of downlink transmission indicates incapability, it indicates that the second sub-station apparatus supports or implements only uplink transmission and does not support or implement downlink transmission. In the case that the information indicating whether the second sub-station apparatus is capable of downlink transmission indicates incapability, the content transmitted in the BMLE may be changed. For example, the BMLE includes some or all of the link ID of the link 1, the link ID of the link 2, the MAC address of the first sub-station apparatus, the MAC address of the second sub-station apparatus, the MAC address of the second sub-access point apparatus, and information indicating the transmission sector selected by the second sub-access point apparatus. Whether the second sub-station apparatus is capable of downlink transmission may be indicated by including information indicating whether the second sub-station apparatus is capable of only uplink transmission in the capability information of the second sub-station apparatus. As an example, in a case that the capability information of the second sub-station apparatus includes the information indicating being capable of only uplink transmission, the second sub-station apparatus may be incapable of downlink transmission and capable of only uplink transmission.

The first sub-station apparatus requests for the SLS by transmitting an SLS request frame to the first sub-access point apparatus at a timing before the data frame transmission, a timing before the RTS transmission, or the like. Note that the SLS request frame may indicate not only the SLS but also beam sweep (beam refinement) for identifying a beam direction with higher accuracy. The SLS request frame includes some or all of an initiating (transmission) timing of the TXSS performed by the second sub-station apparatus, the number of transmission sectors of the SLS, a transmission timing of a beam search (beam sweep, sector sweep) response signal, a transmission time limit of a beam search (beam sweep, sector sweep) response signal, and a frequency band for performing the SLS. In addition, the second sub-station apparatus may perform beacon transmission (broadcast signal, multicast signal) according to an indication by the access point. Here, the beacon transmitted by the second sub-station apparatus may include a time stamp and capability information as in the beacon transmitted by the access point apparatus, but does not necessarily need to include all the same signals as the beacon frame transmitted by the access point apparatus, and may be a second beacon frame different from the beacon frame transmitted by the access point apparatus. The beacon frame transmitted by the second sub-station apparatus may be broadcast, or the SSID of the access point apparatus that has provided the indication may be included in a field of the beacon frame. In the case that the SSID of the access point apparatus that has provided the indication is included in the field of the beacon frame, only the access point apparatus transmits a beam search response signal to the first sub-station. The beam search response signal may include, in addition to information indicating a transmission sector (beam index) expected to be used at the time of transmission from the second sub-station apparatus, reception strength, information indicating the second sub-station apparatus, and the like. The sector sweep performed by the second sub-station apparatus may be interpreted as a sector sweep other than the TXSS. The second sub-access point apparatus performs a reception operation as a TXSS responder a number of times equal to the number of transmission sectors of the SLS from the initiating timing of the TXSS, and selects a preferred transmission sector (sector ID, beam index). Then, the first sub-access point apparatus transmits the beam search response signal including information indicating the preferred transmission sector (sector ID, beam index) selected by the second sub-access point apparatus at the transmission timing of the beam search response signal. The preferred transmission sector may be obtained by the first sub-access point apparatus or the second sub-access point apparatus by a calculation formula using all or some of signals received by the second sub-access point apparatus, or may be obtained by a method of selecting one or more numerical values from multiple numerical values determined in advance by capability information or other information received by the first sub-access point apparatus or the second sub-access point apparatus. Alternatively, a transmission sector that satisfies a reference value (threshold) such as reception power may be selected. Note that in a case that the first sub-access point apparatus cannot transmit the beam search response signal by the transmission time limit of the beam search response signal, the second sub-station apparatus may transmit the SLS request frame again, or may transmit a data frame using the result of the previous SLS. Note that the beam search response signal may be the second link control information including the information indicating the preferred transmission sector selected by the second sub-access point apparatus. The beam search response signal may include information for identifying a sub-station apparatus or a link of the association destination, for example, at least one of a MAC address of a transmission side (e.g., the second sub-station apparatus), a MAC address of a reception side (e.g., the second sub-access point apparatus), or a corresponding link ID (e.g., a link ID of the link 2). Furthermore, the reception quality (received signal strength (RSSI), reference signal received power (RSRP), or information indicating whether a prescribed quality is satisfied) in the preferred transmission sector may be included in the beam search response signal. Furthermore, in a case that the prescribed quality notified from the sub-station apparatus is not satisfied in the beam search, the beam search response signal need not be transmitted. The prescribed quality may be included in a beacon or the like. Since the sub-access point apparatus being capable of recognizing the quality of the transmission sector allows association with another station apparatus to be prioritized or the terminal to associate with another access point apparatus, the performance of the entire system can be improved.

The first sub-access point apparatus may transmit the SLS response frame as a response to the SLS request frame received from the first sub-station apparatus. The SLS response frame includes some or all of an initiating (transmission) timing of the TXSS performed by the second sub-station apparatus, the number of transmission sectors of the SLS, and a transmission timing of a beam search (beam sweep, sector sweep) response signal. The second sub-access point apparatus acquires a TXOP by carrier sense and performs sector sweep within the TXOP duration. That is, the period from the initiating timing of the TXSS indicated by the SLS response frame to the end of transmission of the sector sweep signal corresponding to the number of transmission sectors of the SLS is within the period of the TXOP acquired by the second sub-access point apparatus. Note that in a case that carrier sense is not required for communication in the second frequency band, the SLS response frame does not need to be transmitted, and the sector sweep signal is transmitted from the initiating timing of the TXSS included in the SLS request frame.

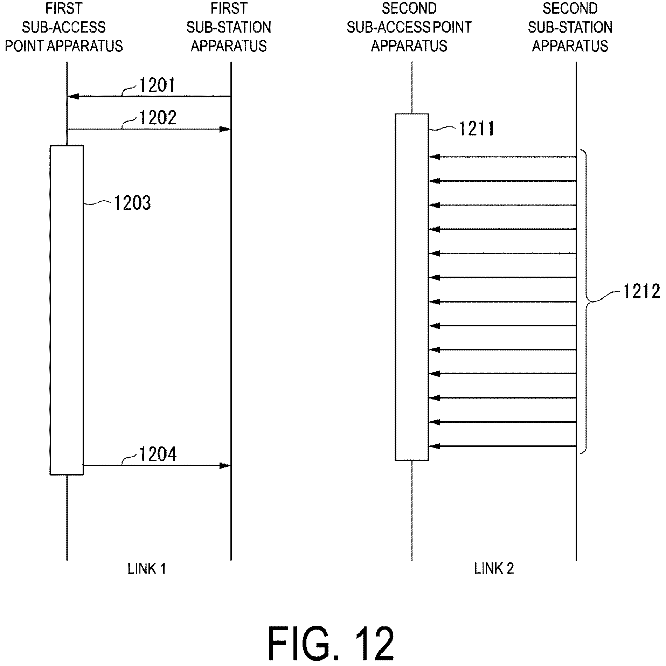

An example of these procedures will be described with reference to FIG. 12. The first sub-station apparatus transmits an SLS request frame 1201 to the first sub-access point apparatus through the link 1. After the first sub-access point apparatus receives the SLS request frame 1201, the second sub-access point apparatus acquires a TXOP 1211 for the second sub-station apparatus to perform SLS through the link 2. The method of acquiring the TXOP 1211 is not particularly limited, and the TXOP may be acquired by transmitting a frame including the NAV by a method in which the second sub-access point apparatus transmits a CTStoSelf frame or transmits an RTS frame after performing the carrier sense in the link 2, or as another method, in a case that the second sub-access point apparatus succeeds in the carrier sense, it may be regarded that the TXOP has been acquired for a prescribed time without transmitting the frame including the NAV. After the second sub-access point apparatus acquires the TXOP 1211 in the link 2, the first sub-access point apparatus transmits a frame 1202 indicating performing the SLS to the first sub-station apparatus. The information such as the initiating timing of the TXSS and the number of transmission sectors of the SLS included in the frame indicating performing the SLS may be determined based on the period of the TXOP 1211 acquired by the second sub-access point apparatus, or may be determined based on a prescribed value such as a value exchanged in advance between the access point apparatus and the station apparatus regardless of the period of the TXOP 1211. After the first sub-station apparatus receives the frame 1202 indicating the performing the SLS, the second sub-station apparatus performs a TXSS 1212 through the link 2. After transmitting the frame 1202 indicating the performing the SLS, the first sub-access point apparatus acquires a TXOP 1203 through the link 1 in order to transmit a frame 1204 including a beam search response signal. The method of acquiring the TXOP 1203 is not particularly limited, and the TXOP 1203 may be acquired by performing the carrier sense in the link 1 again after the transmission of the frame 1202 indicating the performing the SLS, or the TXOP 1203 may be acquired in advance at the time of the transmission of the frame 1202 indicating the performing the SLS, and the NAV including the TXOP 1203 may be transmitted when the frame 1202 indicating the performing the SLS is transmitted. After the second sub-station apparatus performs the TXSS 1212, the first sub-access point apparatus transmits the frame 1204 including a beam search response signal within the range of the TXOP 1203. With such processing, it is possible to transmit the beam search response within the time limit. The processing related to this procedure is not limited to the order of FIG. 12, and the order of a part of the processing may be changed, or multiple processing operations may be collectively performed.

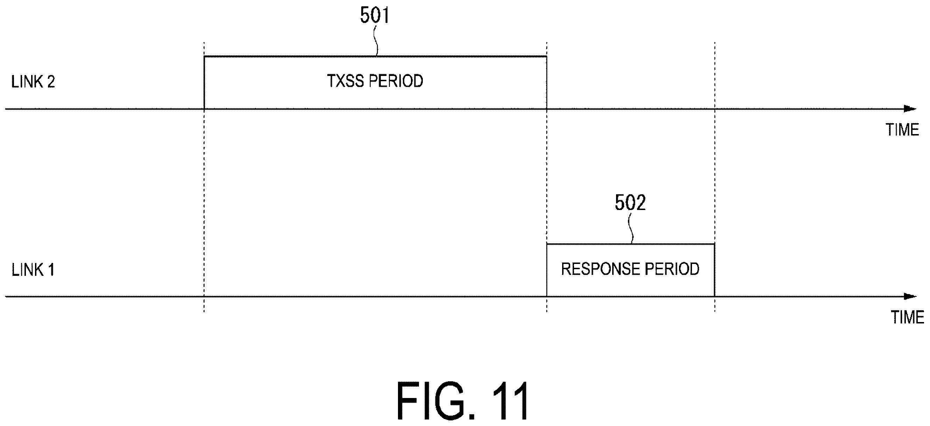

In a case that the sub-access point apparatus 20000-2 which is the first sub-access point apparatus transmits the beam search response signal after the carrier sense, the beam search response signal may be late for the transmission time limit. Therefore, in order to transmit the beam search response signal more reliably, it is conceivable to acquire a transmission period in advance. FIG. 11 illustrates an example. In the example of FIG. 11, after a TXSS period 501 in the link 2, a beam search response period 502 is configured in the link 1. A TXOP in the beam search response period 502 may be acquired by the sub-station apparatus 30000-2 or the sub-access point apparatus 20000-2. In a case that the sub-station apparatus 30000-2 acquires the TXOP, the sub-station apparatus 30000-2 transmits an RTS frame or a CTS-to-Self frame in order to protect or reserve the acquired TXOP. In the case that the sub-station apparatus 30000-2 acquires the TXOP, the sub-station apparatus 30000-2 may perform carrier sense in the link 1. In a case of using the RTS frame, the MAC address indicating the sub-access point apparatus 20000-2 may be included in the RA field. The sub-station apparatus 30000-2 may use a trigger frame as a method of protecting and reserving the TXOP. The trigger frame to be used may be newly defined to transmit the beam search response, or the trigger frame used before IEEE 802.11ax and previous versions may be diverted. A trigger-based sounding protocol may be partially modified to protect and reserve the TXOP for the beam search response. At this time, a value for requesting a beam search response, for example, 2047 may be configured for the AID field used in an NDP announcement frame such that the NDP announcement frame indicates that a beam search response is requested. Other fields than this may be used, for example, and a specific value of a Sounding Dialog Token field may indicate that a beam search response is requested. The trigger frame following the NDP announcement frame may indicate that the TXOP for the beam search response is protected and reserved. Note that a specific value of a Trigger Type subfield may mean that the trigger frame protects and reserves the TXOP for the beam search response. In a case that the NDP announcement frame transmitted before the trigger frame indicates that the beam search response is requested, a value indicating NDP Feedback Report Poll may be used as the value of the Trigger type subfield. As another modification, MU cascading sequence may be diverted. For example, in a case that the sub-station apparatus 30000-2 acquires a TXOP in the link 1, and transmits ACK or Block ACK and subsequently transmits a trigger frame while performing MU cascading sequence, the trigger frame may include information indicating transmission of the sub-access point apparatus 20000-2 in order to request transmission of a beam search response. At this time, the trigger frame may include information for requesting transmission of a beam search response.

In a case that the sub-access point apparatus 20000-2 receives the RTS frame including the MAC address indicating the sub-access point apparatus 20000-2 or the CTS-to-Self frame, or other information indicating that the TXOP is acquired, the sub-access point apparatus 20000-2 transmits the beam search response signal in the TXOP duration indicated by the RTS frame or the CTS-to-Self frame without performing the carrier sense. The sub-access point apparatus 20000-2 which is the first sub-access point apparatus, in a case of not receiving the RTS frame or the CTS-to-Self frame, may perform the carrier sense to acquire a TXOP, and transmit a beam search response signal. The first sub-station apparatus can transmit a trigger frame for requesting transmission of a beam search response signal to the sub-access point apparatus 20000-2 which is the first sub-access point apparatus within the TXOP duration. The sub-access point apparatus 20000-2 which is the first sub-access point apparatus, in a case of receiving the trigger frame for requesting the transmission of the beam search response signal of the sub-access point apparatus 20000-2, transmits the beam search response signal as a response to the trigger frame. Note that the trigger frame may be transmitted by the sub-station apparatus 30000-3 which is the second sub-station apparatus, or by the sub-station apparatus 30000-4. Note that the first sub-station apparatus or the second sub-station apparatus may notify the first sub-access point apparatus or the second sub-access point apparatus in advance of whether to transmit a trigger frame for requesting transmission of a beam search response signal of the sub-access point apparatus 20000-2, using a control frame. The first sub-access point apparatus can also periodically configure a response period in which the first sub-station apparatus can transmit the ISSW field signal. For example, by use of a control frame such as a beacon frame, a response period in which the sub-station apparatus 1 can transmit the ISSW field signal can be configured during the TXOP duration indicated by the beacon frame. In this case, the first sub-station apparatus transmits the ISSW field signal during the period in which a response period in which the ISSW field signal of the first sub-station apparatus can be transmitted is configured. Note that since another communication apparatus may communicate during the response period, transmission of signals other than the ISSW field signal may be restricted. The first sub-access point apparatus may configure a quiet interval that overlaps the response period, and restrict access from other communication apparatuses. The quiet interval is a period in which only the allowed communication apparatuses can access. The ISSW field signal may be interpreted as an RSSW field signal or another signal.

It is also conceivable that the sub-station apparatus does not support downlink transmission in multiple links. In the example of FIG. 6, assume that transmission or reception is performed using the 2.4 GHz band in the link 1, the 60 GHz band in the link 2, and the 140 GHz band in the link 3. At this time, assume that the sub-station apparatus 30000-3 and the sub-station apparatus 30000-4 support only transmission. Note that the sub-access point apparatus 20000-4 is also referred to as a third sub-access point apparatus, and the sub-station apparatus 30000-4 is also referred to as a fourth sub-station apparatus. At this time, the first sub-access point apparatus transmits second link control information related to the second sub-station apparatus and third link control information related to the third sub-station apparatus to the first sub-station apparatus. A response period in which a beam search response signal is transmitted to the second sub-station apparatus and a response period in which a beam search response signal is transmitted to the third sub-station apparatus may be different or the same. In a case that the response periods in which two sub-access point apparatuses transmit the beam search response signals respectively are different, the link control information is transmitted in each of the response periods. In a case that the response periods for two sub-access point apparatuses overlap or one response period is configured, a beam search response signal including the second link control information of the respective links is transmitted.

In a case that downlink is not supported in multiple links and uplink is supported in multiple communication links, DL/UL link combination may be configured. For example, assume that the first link (first sub-station apparatus) and the second link (second sub-station apparatus) do not support downlink, and the third link (third sub-station apparatus) and the fourth link (fourth sub-station apparatus) support downlink. In this case, a link for performing downlink transmission may be configured for the first link and the second link. For example, the DL/UL combination may configure the third link for the first link and the fourth link for the second link. Note that pairs that can be configured for the DL/UL link combination may be limited. The DL/UL link combination is not configured for a scheme (function) limited to communication of only one link among multiple links. For example, a link combination configured for non simultaneous transmission and reception (NSTR), enhanced multi link single radio (EMLSR), or enhanced multi link multi radio (EMLMR) is not configured as the DL/UL link combination. Note that for an NSTR link pair, while transmission is performed in one link, reception is not possible in another link. EMLSR and EMLMR are schemes in which the communication state can be observed in multiple links, but only one link is used in data communication. In a case that the beam search response is transmitted, information indicating the selected preferred transmission sector in the link included in the DL/UL combination may be included. The link for transmitting the beam search response may be selected from the links included in the DL/UL combination.

Although the communication apparatuses according to an aspect of the present invention can perform communication in a frequency band (frequency spectrum), generally called an unlicensed band, that does not require approval to use from a country or region, available frequency bands are not limited thereto. The communication apparatuses according to an aspect of the present invention can exhibit the effect in a frequency band called a white band (e.g., frequency bands allocated for television broadcasting but unused in certain regions) or a shared spectrum (shared frequency band), the frequency band being not actually used in order to prevent interference between frequencies regardless of the approval to use for a specific service from a country or region, the shared spectrum being expected to be shared by multiple operators.

A program operated in the radio communication apparatuses according to an aspect of the present invention is a program (a program for causing a computer to function) for controlling a CPU or the like to implement the functions of the aforementioned embodiment according to an aspect of the present invention. In addition, information handled by these apparatuses is temporarily accumulated in a RAM at the time of processing, is then stored in various types of ROMs and HDDs, and is read by the CPU as necessary to be corrected and written. A semiconductor medium (e.g., a ROM, a non-volatile memory card, or the like), an optical recording medium (e.g., a DVD, an MO, an MD, a CD, a BD, or the like), a magnetic recording medium (e.g., a magnetic tape, a flexible disk, or the like), and the like may be examples of recording media for storing programs. In addition to implementing the functions of the aforementioned embodiment by performing loaded programs, the functions of the present invention may be implemented in processing performed in cooperation with an operating system, other application programs, and the like based on indications of those programs.

In a case of delivering these programs to market, the programs can be stored and distributed in a portable recording medium, or transferred to a server computer connected via a network such as the Internet. In this case, storage apparatuses of the server computer are also included in an aspect of the present invention. A part or an entirety of the communication apparatuses in the aforementioned embodiment may be implemented as an LSI that is typically an integrated circuit. The functional blocks of the communication apparatuses may be individually implemented as chips or may be partially or completely integrated into a chip. In a case that the functional blocks are made as integrated circuits, an integrated circuit controller for controlling them is added.

In addition, the circuit integration technique is not limited to LSI, and implementation as a dedicated circuit or a general-purpose processor may be adopted. Moreover, in a case that a circuit integration technology that substitutes LSI appears with the advance of the semiconductor technology, it is also possible to use an integrated circuit based on the technology.

Note that the invention of the present application is not limited to the above-described embodiment. The radio communication apparatus according to the invention of the present application is not limited to the application in the mobile station device, and, needless to say, can be applied to a fixed-type electronic apparatus installed indoors or outdoors, or a stationary-type electronic apparatus, for example, an AV apparatus, a kitchen apparatus, a cleaning or washing machine, an air-conditioning apparatus, office equipment, a vending machine, and other household apparatuses.

Although the embodiment of the invention has been described in detail above with reference to the drawings, a specific configuration is not limited to the embodiment, and designs and the like that do not depart from the essential spirit of the invention also fall within the claims.

### Industrial Applicability

An aspect of the present invention can be preferably used in a communication apparatus and a communication method.

### Reference Signs List

1-1, 1-2 Radio communication apparatus
2-1 to 2-6 Radio communication apparatus
3-1, 3-2 Radio communication system
10000-1 Radio communication apparatus
10001-1 Higher layer processing unit
10001a-1 Multi-link controller
10002-1 Controller
10002a-1 CCA unit
10002b-1 Backoff unit
10002c-1 Transmission determination unit
10003-1 Transmitter
10003a-1 Physical layer frame generator
10003b-1 Radio transmitting unit
10004-1 Receiver
10004a-1 Radio receiving unit
10004b-1 Signal demodulation unit
10004c-1 Reception quality measuring unit
10005-1 Antenna unit
20000-1 MLD access point apparatus
20000-2, 20000-3, 20000-4 Sub-radio communication apparatus (sub-access point apparatus)
30000-1 MLD station apparatus
30000-2, 30000-3, 30000-4 Sub-radio communication apparatus (sub-station apparatus)
401-1, 401-2, 401-15, 402-1, 402-2, 402-15 SSW field
501 TXSS period
502 Response period

## Claims

1. An access point apparatus that communicates with a station apparatus, the access point apparatus comprising:
a receiver;
a transmitter; and
a controller, wherein
the receiver receives a sector sweep request frame using a first frequency band and receives multiple sector sweep signals using a second frequency band,
the transmitter transmits a sector sweep response frame and a beam index indicating one of the multiple sector sweep signals using the first frequency band;
the controller determines, after receiving the multiple sector sweep signals, the beam index to be used by the station apparatus for transmission, and controls the transmitter to transmit the beam index to the station apparatus;
the sector sweep request frame includes information indicating the second frequency band; and
the sector sweep response frame includes a transmission timing of a sector sweep transmit signal, and the multiple sector sweep signals are received from the transmission timing.

2. The access point apparatus according to claim 1, wherein
the transmitter transmits information related to the beam index in a transmission opportunity held by the station apparatus.

3. The access point apparatus according to claim 1, wherein
the receiver acquires a transmission opportunity by carrier sense in the second frequency band, and
receives the multiple sector sweep signals during a period of the transmission opportunity.

4. A station apparatus that communicates with an access point apparatus, the station apparatus comprising:
a transmitter;
a receiver; and
a controller, wherein
the receiver receives a sector sweep response frame and a beam index indicating one of multiple sector sweep signals using a first frequency band,
the sector sweep response frame includes information indicating a second frequency band and a transmission timing of a sector sweep signal,
the transmitter transmits the multiple sector sweep signals in the second frequency band and at the transmission timing included in the sector sweep response frame, and
the controller controls beamforming in the second frequency band based on information related to the beam index.

5. The station apparatus according to claim 4, wherein
the controller acquires a transmission opportunity, and
the transmitter transmits information for requesting reception of the information related to the beam index to the access point apparatus and receives the information related to the beam index from the access point apparatus during a period of the transmission opportunity.
